# EUROPEAN PATENT SPECIFICATION

(11) **EP 1 387 781 B1**
(45) Date of publication and mention of the grant of the patent: **08.06.2005**
(21) Application number: 02719580.9
(22) Date of filing: 05.04.2002
(51) Int. Cl.: B60R 7/02, B65D 6/18

(54) **CARGO ORGANIZER WITH FLIP-UP WALLS**
GEPÄCK-ORGANIZER MIT HOCHKLAPPBAREN WÄNDEN
DISPOSITIF DE RANGEMENT POUR COFFRE DOTE DE PAROIS ESCAMOTABLES

(30) Priority: 06.04.2001 US 281777 P
(43) Date of publication of application: 11.02.2004
(73) Proprietor: Neocon International Inc., Dartmouth Nova Scotia B3B 1J7 (CA)
(72) Inventor: RYAN, Patrick, T., Halifax, Nova Scotia B3H 3R6 (CA)
(74) Representative: Wolff, Francis Paul
(86) International application number: PCT/CA2002/000479
(87) International publication number: WO 2002/081263

(56) References cited:
- EP-A- 0 864 466
- WO-A-01/21441
- DE-A- 4 340 675
- DE-A- 4 432 369

## Description

### TECHNICAL FIELD

The present invention relates to a cargo organizer for the cargo compartment of a vehicle.

Throughout this description, in the interest of consistency and certainty, "front" is with reference to the front of the vehicle, and "rear" or "back" is with reference to the rear of the vehicle. Thus, for example, the rear of an automobile trunk or of the organizer is intended to mean the portion closest to the rear of the automobile.

### BACKGROUND ART

Historically, vehicle cargo compartment areas such as automobile trunks (or "boots"), have been lacking in several respects for the user. With the ever-increasing popularity of so-called minivans, the cargo space has increased, but the basic drawbacks are the same.

Firstly, cargo compartment areas commonly have poor storage and organization capability, one problem being that heavy cargo could slide on the cargo compartment floor and damage lighter, fragile cargo.

Secondly, any storage or organizing devices permanently positioned in the cargo compartment will necessarily obstruct and hamper the utilization of the available cargo space, which could mean that larger cargo cannot fit in the cargo compartment, although the cargo compartment physical dimensions would allow it.

To address these problems, a rigid cargo compartment liner was developed as disclosed in WO 94/12370. The liner comprises a generally trough shaped plastic liner, optionally provided with a plurality of dividers, for dividing the larger space inside the liner into several smaller areas. The one-piece construction of the trough part of the liner, i.e. the side walls and the bottom wall, provides an effective means of keeping dirt and unwanted substances inside the liner and away from the cargo area carpet. One apparent drawback with the rigid liner is that, if the organization feature of the liner is not to be used, the entire liner has to be removed from the storage compartment, to provide as much unobstructed storage space as possible.

DE 4432369 describes a cargo organizer according to the preamble of claim 1. The cargo organizer rests on the floor of an area and when storage is required, a user opens up the storage area by grabbing the handles and pulling up. The panels then open up into a box which allows for storage.

### DISCLOSURE OF INVENTION

It is an object of the invention to provide a cargo organizer that may easily be incorporated into the cargo compartment of a vehicle, regardless of the shape and size of the access opening to that space. The cargo organizer is offered as a means of enabling users to broaden cargo compartment usage without fear of cargo causing damage to the cargo compartment area or cargo being damaged by it sliding over the cargo floor and hitting the cargo compartment side walls.

Another object of the invention is to provide a cargo organizer that offers various benefits, including improving storage capability by providing increased overall flexibility. The organizer does not interfere with existing vehicle features, but is an integral part within the vehicle cargo space. One example is cargo net hooks, which are accessible also when the cargo organizer is installed in the vehicle.

In the invention, a cargo storage system for a vehicle, comprises a pair of opposing panels pivotable between open and closed positions. In the open position, the panels are generally upright and spaced apart, thereby exposing a storage compartment. In the closed position, the panels are generally co-planar and abut each other so as to cover the storage compartment. Further, mechanical means (or actuator means) are connected between the panels for producing coordinated movement of the panels, such that movement of one of the panels between the open and closed positions produces corresponding movement of the other of the panels. In this way, only one panel has to be operated to make both panels move in similar fashion (from closed position to open position and back. The mechanical means are advantageously substantially hidden from view, by being concealed in a base structure.

Several embodiments of the mechanical means are possible, as long as the desired movement of the panels is accomplished. Advantageously, the mechanical means are lever arms on the panels connected to each other and possibly to a release mechanism via push rods. Alternatively, the mechanical means comprise sprocket wheels attached to the panels and connected via a chain loop. A further alternative is the mechanical means having pulley wheels attached to the panels and connected via a belt loop. Yet another alternative is the mechanical means having intermeshing toothed elements, or the mechanical means having lever arms attached to the panels and connected via bendable elongate members, such as wire cables or strings.

The system further advantageously has releasing means for releasing the panels from their stored position.

Advantageously, biasing means automatically move the panels to the open position when the releasing means is operated. The biasing means are, for example springs. Alternatively, the panels are moved manually from closed to open positions. In either embodiment, the panels are manually moved from the open position to the closed position.

The system advantageously has spaced-apart flexible means between the panels to define storage areas between the flexible means and the panels. The flexible means are for example nets, advantageously with resilient cords intertwined with the nets, or foldable panels.

The system advantageously has a detachable tray providing at least partly covered protection for a floor of the vehicle. Alternatively, the tray is fixedly attached to the organizer system. Still a further alternative is to have the system integrated into a depression in the floor of the vehicle, without the tray being used.

The cargo organizer can be adapted to the cargo compartment of virtually any vehicle, including but not limited to automobile trunks, station wagon rear compartments, and van, minivan or "4x4" luggage areas.

Further features of the invention will be described or will become apparent in the course of the following detailed description.

### BRIEF DESCRIPTION OF DRAWINGS

In order that the invention may be more clearly understood, the preferred embodiment thereof will now be described in detail by way of example, with reference to the accompanying drawings, in which:
- Fig. 1: is a perspective side view of a cargo organizer according to the invention, showing its pivotable lids or panels in their closed position;
- Fig. 2A: is a top plan view of the cargo organizer of Fig. 1;
- Fig. 2B: is a plan side view of the cargo organizer of Fig. 1, seen from a release mechanism side;
- Fig. 2C: is a plan end view of the cargo organizer of Fig. 1;
- Fig. 3: is a section along the line A-A of Fig. 2B;
- Fig. 4: is a section along the line B-B of Fig. 2B;
- Fig. 5: is a section along the line C-C of Fig. 2B;
- Fig. 6: is a bottom plan view of the cargo organizer of Fig. 1;
- Fig. 7: is a perspective side view of a cargo organizer according to the invention, showing its pivotable lids in their open position;
- Fig. 8A: is a top plan view of the cargo organizer of Fig. 7;
- Fig. 8B: is a plan side view of the cargo organizer of Fig. 7;
- Fig. 8C: is a plan end view of the cargo organizer of Fig. 7;
- Fig. 9: is a section along the line D-D of Fig. 8B;
- Fig. 10: is a section along the line E-E of Fig. 8B;
- Fig. 11: is a section along the line F-F of Fig. 8B;
- Fig. 12: is a bottom plan view of the cargo organizer of Fig. 7;
- Fig. 13A: is a perspective view of a first embodiment of release means according to the invention;
- Fig. 13B: is a perspective view of a first embodiment of a first part of an actuator mechanism according to the invention;
- Fig. 13C: is a perspective view of a first embodiment of a second part of the actuator means according to the invention;
- Fig. 14A: is a schematic view of a second embodiment of release means and actuator mechanism according to the invention;
- Fig. 14B: is a schematic view of a third embodiment of release means and actuator mechanism according to the invention;
- Fig. 15: is a perspective side view of a cargo organizer according to the invention, showing the organizer in one application within a vehicle and showing the organizer's pivotable lids in their closed position;
- Fig. 16: is a perspective side view of a cargo organizer according to the invention, showing the organizer in one application within a vehicle and showing the organizer's pivotable lids in their open position;
- Fig. 17: is a plan end view of a cargo organizer according to a further embodiment of the invention, showing the organizer being placed on a first type of tray, the tray and the organizer being separate units;
- Fig. 18: is a plan end view of a cargo organizer according to yet a further embodiment of the invention, showing the organizer being integrally formed in the floor of a cargo space of a vehicle;
- Fig. 19: is a plan end view of a cargo organizer according to still a further embodiment of the invention, showing the organizer being placed on a second type of tray, the tray and organizer forming an integral unit;
- Fig. 20: is a perspective view of a cargo organizer of Fig. 18, showing the organizer in the cargo space of a vehicle and the lids in the closed position;
- Fig. 21: is a perspective view of a cargo organizer of Fig. 18, showing the organizer in the cargo space of a vehicle and the lids in the open position;
- Fig. 22: is a top plan view of the cargo organizer of Fig. 21;
- Fig. 23: is a perspective view of a fourth embodiment of a first part of an actuator mechanism according to the invention;
- Fig. 24: is a plan side view of the actuator mechanism of Fig. 23;
- Fig. 25: is a top plan view of the actuator mechanism of Fig. 23;
- Fig. 26: is a plan end view of the actuator mechanism of Fig. 23;
- Fig. 27: is a perspective view of a sub frame of the fourth embodiment of the first part of the actuator mechanism;
- Fig. 28: is a plan side view of the sub frame of Fig. 27;
- Fig. 29: is a top plan view of the sub frame of Fig. 27;
- Fig. 30: is a plan end view of the sub frame of Fig. 27;
- Fig. 31: is a perspective view of a release mechanism according to one embodiment of the invention;
- Fig. 32: is a plan side view of the release mechanism of Fig. 31;
- Fig. 33: is a top plan view of the release mechanism of Fig. 31; and
- Fig. 34: is a plan end view of the release mechanism of Fig. 31.

### BEST MODE FOR CARRYING OUT THE INVENTION

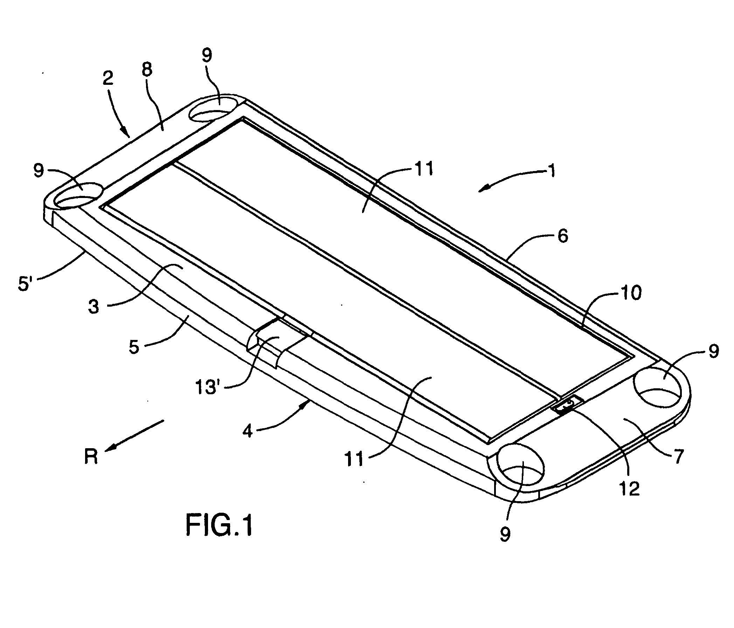

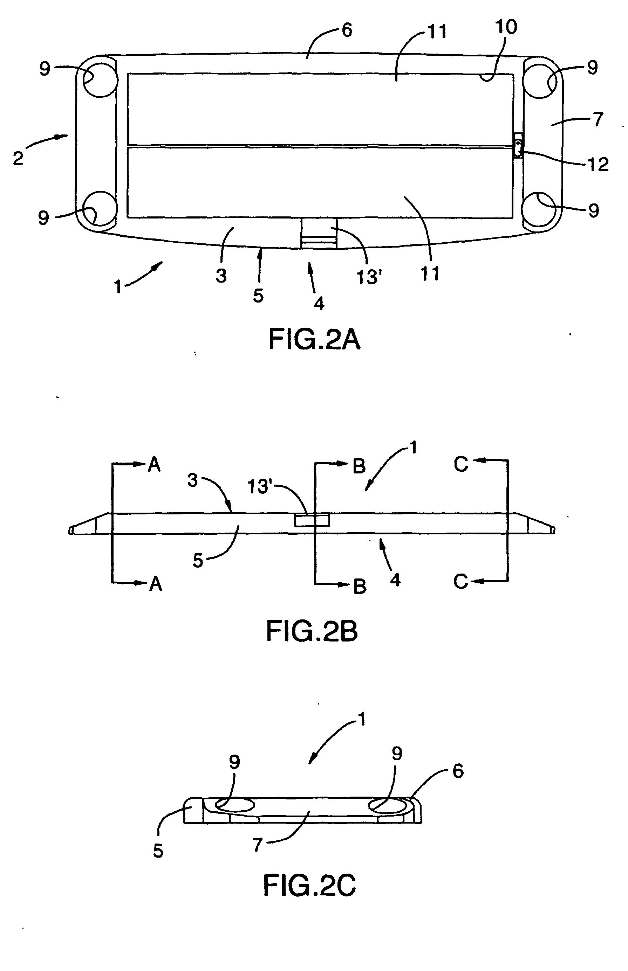

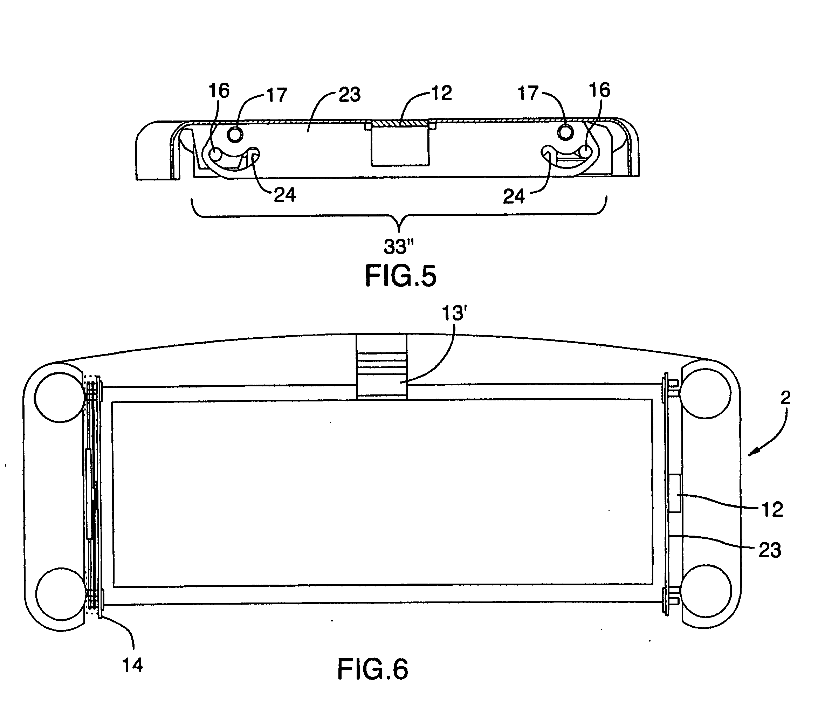

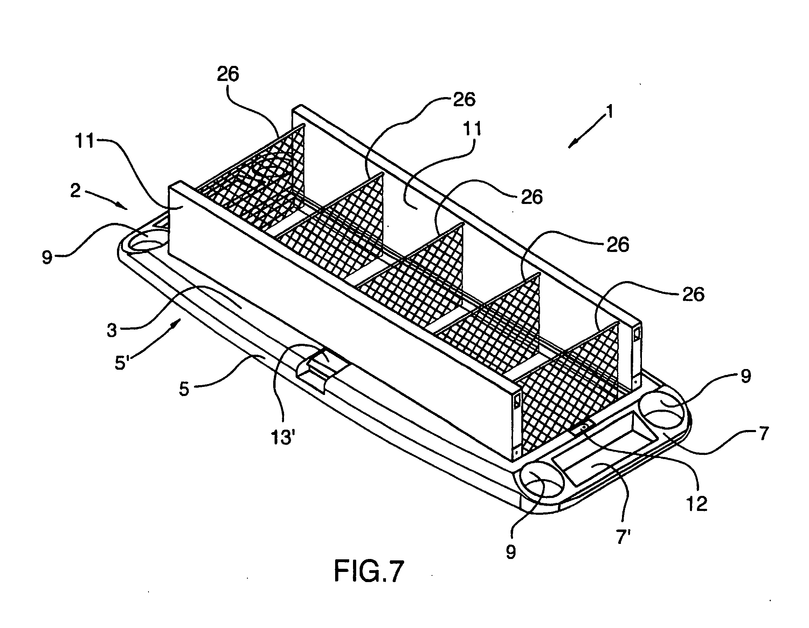

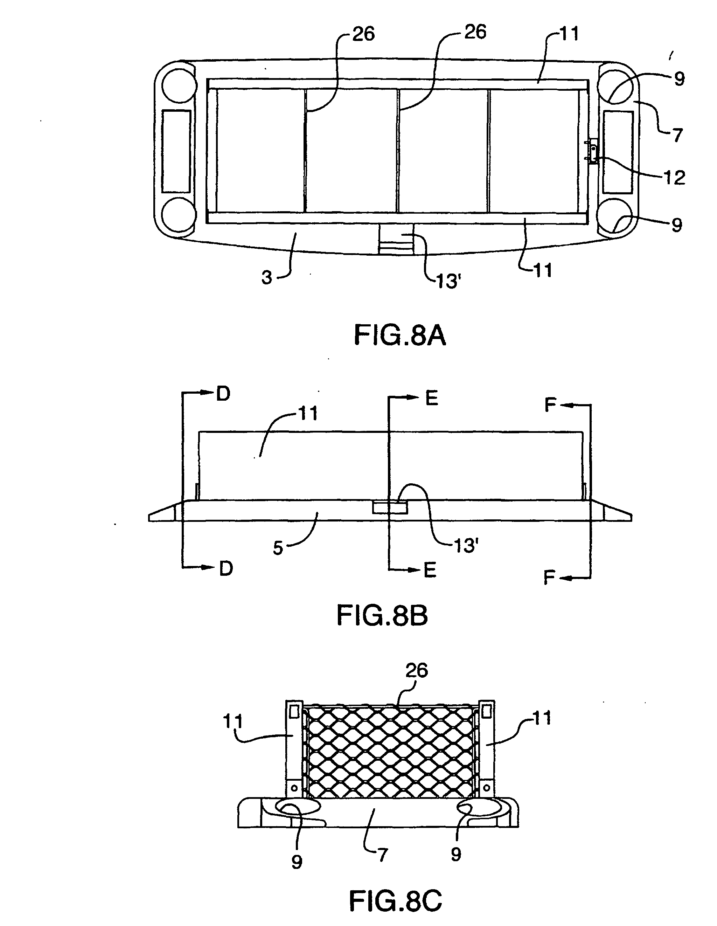

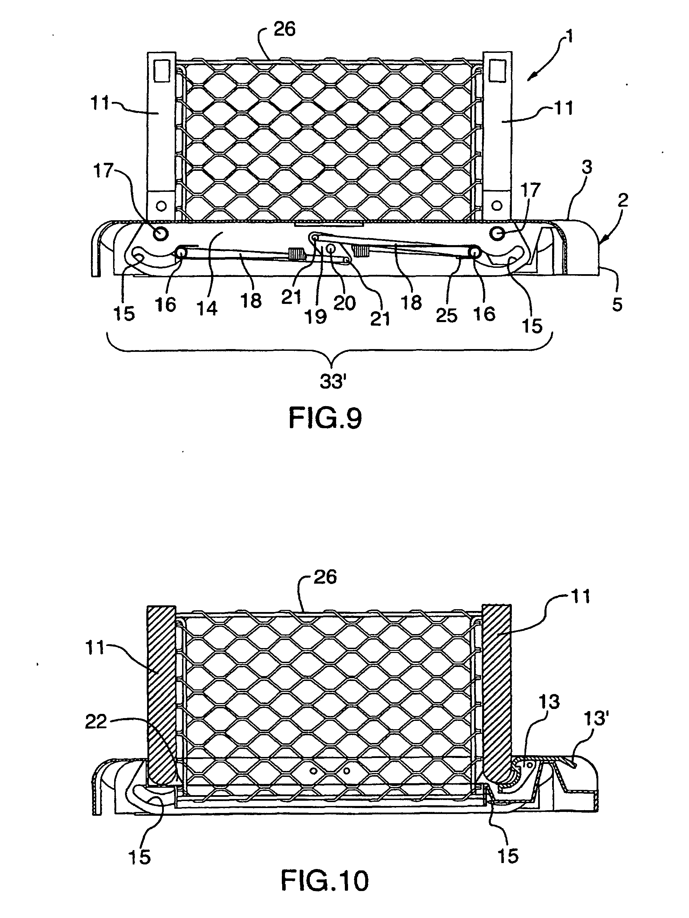

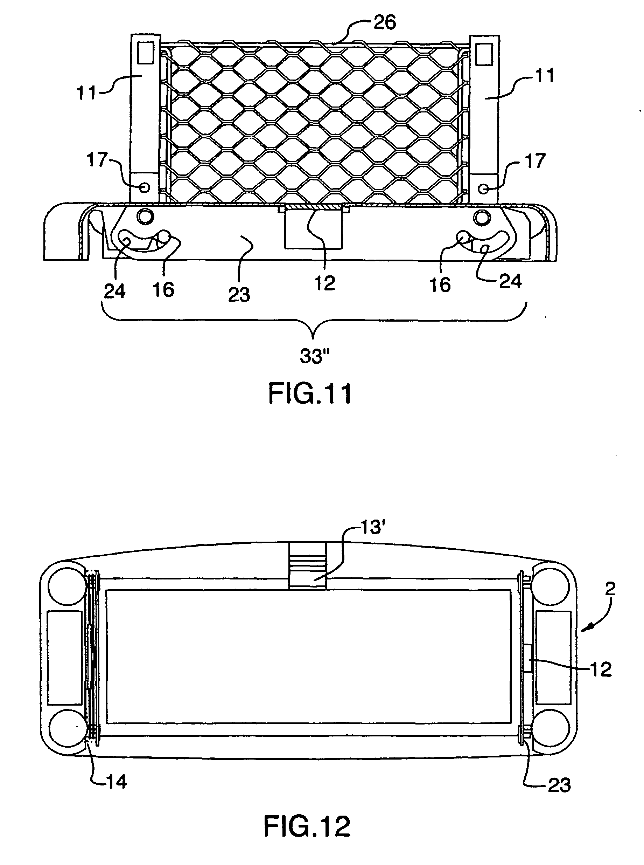

Referring to Figs. 1 to 16, a cargo storage organizer **1** has a base frame **2,** which is generally elongated in shape with a top portion **3,** a substantially flat bottom portion **4,** a front portion **5,** a rear portion **6,** a first side portion **7** and a second side portion **8.** Further, access holes **9** are arranged on the frame corresponding to the actual placement of cargo tie down hooks or similar (not shown) already a part of the vehicle in which the cargo organizer is intended to be used. The frame **2** has a recess **10,** in which a pair of panels **11** are pivotally mounted. Each panel is pivotable between a closed position (as shown in Figs. 1 to 6), in which an upper surface of the panel is substantially flush with the top portion **3** of the frame **2,** and an open position (as shown in Figs. 7 to 12). A first lock/release mechanism **12** is arranged on the frame **2** to permit the lock and release of the panels from/into their closed position, and a second lock/release mechanism **13** is arranged on the frame to permit the lock and release of the panels from/into their open position, operable via a release lever **13'.** Thus, the first lock/release mechanism **12** releasably holds the panels **11** in their closed position until manipulated to release the panels, and the second lock/release mechanism **13** releasably holds the panels **11** in their open position until manipulated to release the panels. The organizer is advantageously oriented in the cargo space of the vehicle so that the second release mechanism **13** is easily accessible from the rear direction of the vehicle, designated **R.** Alternatively, not shown, the orientation is such that the second release mechanism is accessible from inside the vehicle, should there be no need to reach it from the outside via an opening in the vehicle. The edge **5'** of the front portion of the frame **2** is advantageously contoured after the inside shape of the adjacent portion of the cargo space of the vehicle, to utilize available space fully and to prevent the organizer from sliding in the cargo space.

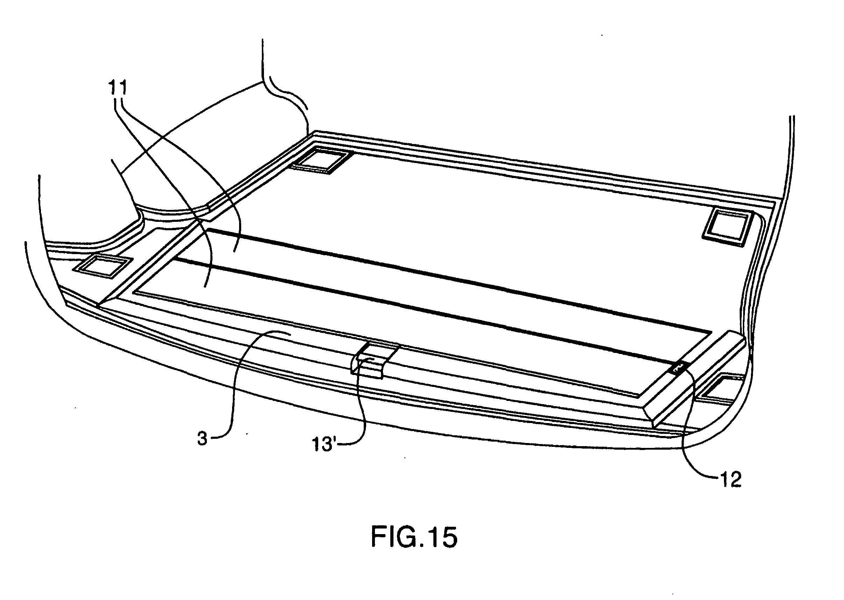

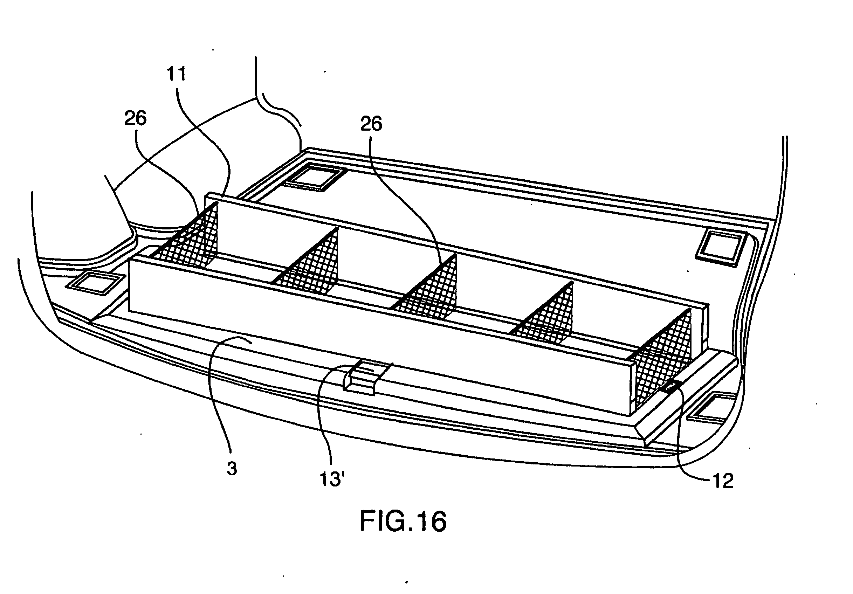

The general shape of the top portion **3** of the frame is preferably slightly convex with sloping sides, so that the front portion **5,** the rear portion **6,** the first side portion **7** and the second side portion **8** taper from a maximum thickness adjacent the recess **10** to lower height approaching the edges of the frame. By having this shape, the frame **2,** and thus the cargo organizer **1,** can be placed on a vehicle cargo floor (see Figs. 15 and 16) and not occupy much space when the panels **11** are in their folded down position, nor pose any substantive obstacle to the full utilization of the cargo floor space, when the panels **11** are folded to their closed position. To produce an even better result, the floor panel can be provided with a recess into which the organized can be fitted, such that the panels when in their folded down position are flush with the surrounding floor panel.

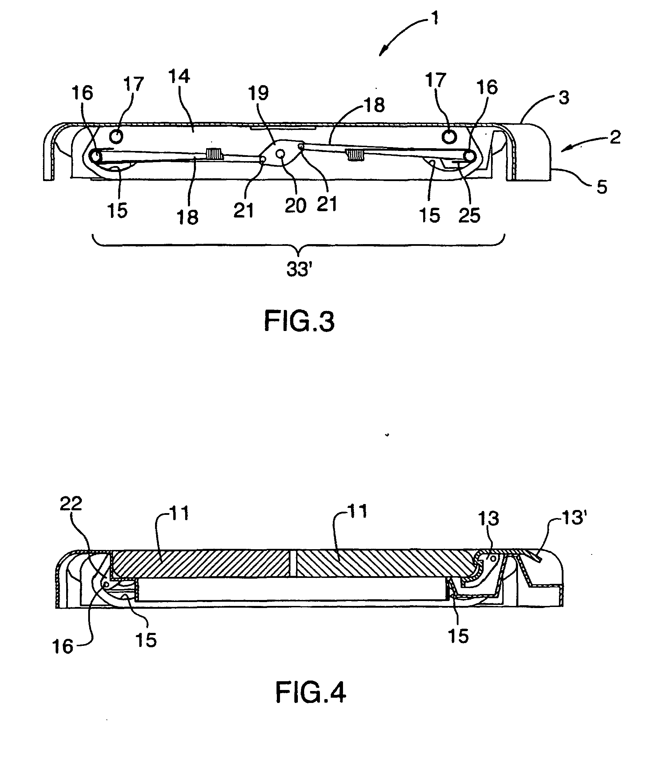

As is shown in Fig. 3, the panels **11** are preferably interconnected via an actuator mechanism **33** (mechanical means or actuator means), which makes the panels move in unison. The actuator mechanism has two parts arranged at short ends of the panels. A first part **33'** is located adjacent the second side portion **8** of the frame **2,** and a second part **33"** is located adjacent the first side portion **7** of the frame. The first portion has a first sub frame **14** fixedly mounted to the frame **2.** The first sub frame is arranged substantially perpendicular to a longitudinal direction of the panels, and has crescent shaped slots **15** arranged at either end of the sub frame. Pins **16** are arranged on the panels **11,** one pin at each end of the panel, preferably on a pin arm **22** extending outwards and downwards from the panel (as shown in Fig. 4). Further, each panel is pivotable around a first pivot axis **17,** arranged in the first sub frame **14,** so that each panel is guided in its pivoting movement by each pin **16** sliding in its corresponding crescent shaped slot **15.** Further, tie rods **18** connect each pin **16** with a symmetrical arm **19,** which is pivotably held on a second pivot axis **20.** Each tie rod **18** is connected to the arm via a pivot **21.**

The second portion has a second sub frame **23** fixedly mounted to the frame **2.** The second sub frame is arranged substantially perpendicular to a longitudinal direction of the panels, and has crescent shaped slots **24** arranged at either end of the sub frame. Pins **16** are arranged on the panels **11,** one pin at each end of the panel, preferably on a pin arm **22** extending outwards and downwards from the panel. Further, each panel is pivotable around a first pivot axis **17,** arranged in the second sub frame **23,** so that each panel is guided in its pivoting movement by each pin **16** sliding in its corresponding crescent shaped slot **24.**

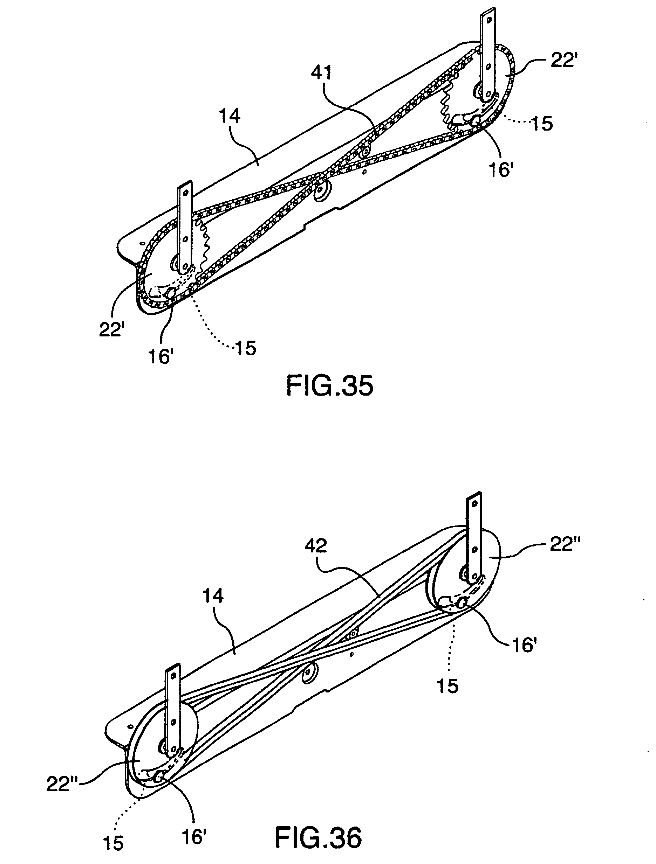

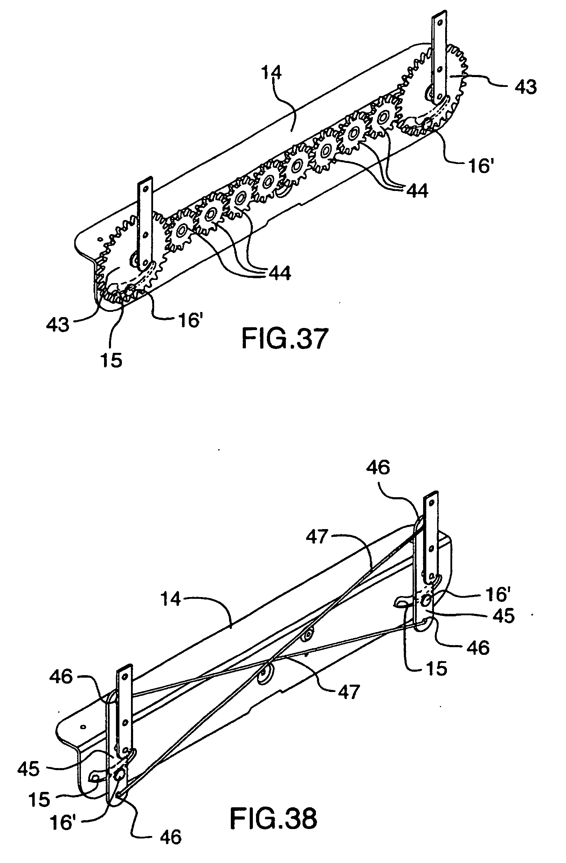

Any embodiment of an actuator mechanism that provides the desired unison movement of the panels may be used, thus the invention is not limited to the shown mechanism. For example, a chain **41** on sprocket wheels **22'** having guide pins **16'** cooperating with the slots **15** (see Fig. 35), a belt **42** on pulleys **22"** having guide pins **16'** cooperating with the slots **15** (see Fig. 36), intermeshing cog wheels **43, 44** (or rods, not shown) having pins **16'** cooperating with the slots **15** (see Fig. 37), or cables/strings **47** cooperating with and attached to holes **46** of cable arms **45** having guide pins **16'** cooperating with the slots **15** (see Fig. 38) in both double (parallel) or single versions (not shown, for longitudinally rigid cables only) may be employed to transfer the movement from one panel to the other.

Each panel **11** is biased towards its open position by biasing means **25,** for example one or more springs. When the panels are in their closed position, they are held by the first lock/release mechanism **12,** and when the panels are in their open position, they are held by the second lock/release mechanism **13,** and also biased into the open position by the biasing means **25.** In the closed position, the panels **11** are generally co-planar and have inner longitudinal edges adjacent each other, the panels then cooperatively defining a generally flat surface. In the open position, the panels are generally parallel to each other and spaced apart from each other.

Spaced-apart foldable means **26** are arranged between the panels **11** to define storage areas between the foldable means and the panels. Preferably, foldable means are arranged adjacent the ends of the panels, to prevent stored material from falling out from the space between the panels, and as needed along the length of the panels, to provide smaller storage compartments. The foldable means **26** are preferably cargo nets, either permanently attached at the bottom of each panel or attached, for instance, via hooks arranged at the bottom of the panels. More preferably, the carbo nets have resilient edge cords, intertwined with the net portion.

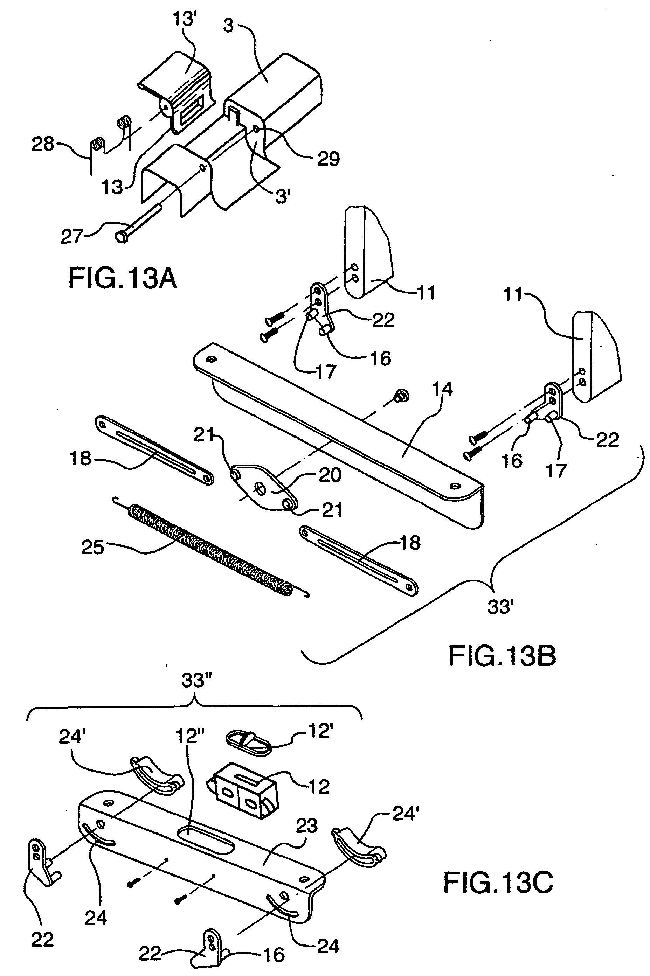

Figs. 13A to 14B show alternative release and actuator mechanisms for use with the organizer according to the invention. The actual mechanism design is not critical, as long as the function of a release operation is provided (together with the biasing means **25).** Fig. 13A shows a second release mechanism **13** arranged on the frame **2** in a recess **3'.** A handle **13'** is used to manipulate the mechanism for releasing the panels (not shown). The handle is biased towards a non-operating position (in which the panels are not released) by a handle spring **28,** and pivotably held in the recess 3' by a bolt **27** inserted into holes **29** in the recess. Fig. 13B shows the first part of the actuating mechanism, employing one biasing means **25.** Fig. 13C shows the second part of the actuating means having the first release mechanism **12** arranged in a hole **12"** of the second sub frame **23,** and a push button **12'** operatingly attached to the first release mechanism, for releasing the panels. Slide enhancing means **24',** for example plastic blocks having a slot corresponding to the slots **24** of the second sub frame **23,** are advantageously used to provide easy sliding of the pins **16** in the slots **24.**

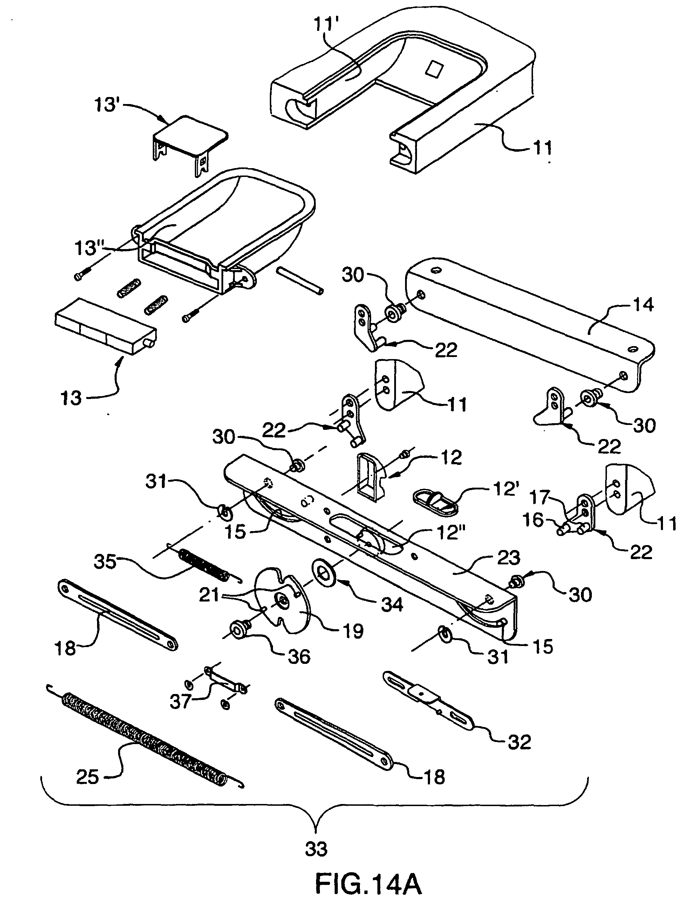

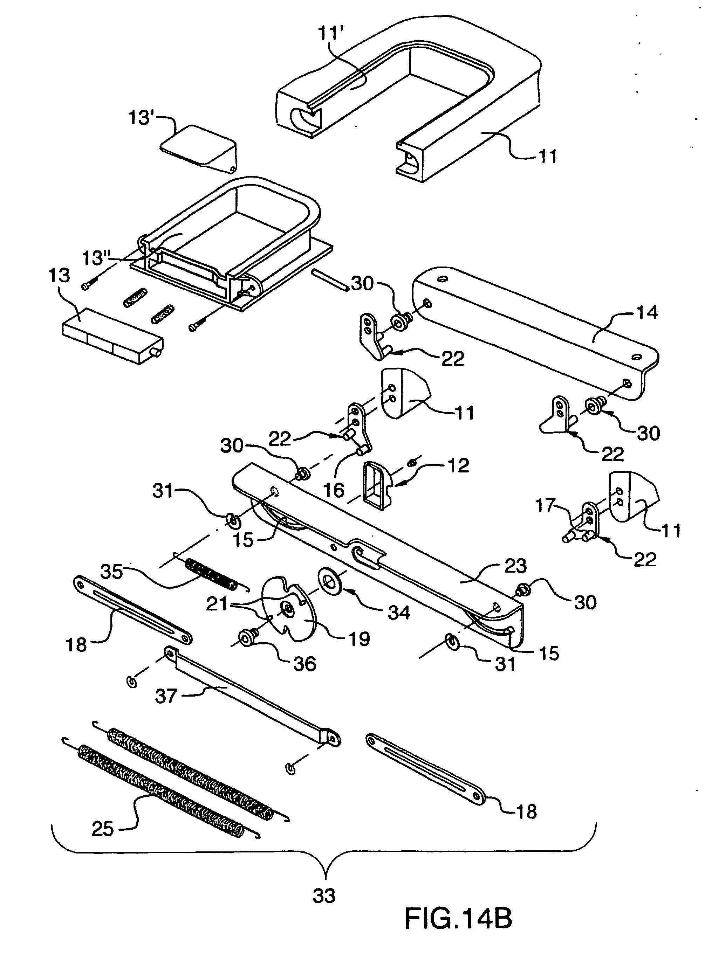

Figs. 14A and 14B show two embodiments of the second release mechanism **13** arranged in cutouts **11'** on the panels **11,** as opposed to being arranged on the frame as described earlier. Fig. 14A shows a mechanism employing a first release mechanism **12** similar to what has been described earlier. A spring **35** biases the first release mechanism **12** and its button **12'** towards its non-operative position (in which the lock is not released). The arm **19** is held to the second sub frame **23,** in operative connection with the first release mechanism, by a lock base **32,** for instance screwed to the sub frame. A washer **34** is advantageously placed between the arm and the sub frame. Further, the arm is held onto the lock base by a link shaft **36** held in place by a link arch **37.** The pin arms **22** are attached to the sub frames using bushings **30** held by e-rings **31.** Fig. 14B shows mechanisms similar to what is shown in Fig. 14A, but the handle **13'** of the second release mechanism **13** is reversed and no first release mechanism **12** is used. The arm **19** can thus be attached directly to the second sub frame **23.** The panels **11** are held in the open position by either a snap lock (not shown), for example protrusions arranged on either the panels or the frame **2,** or entirely by the biasing means **25.** Two springs are shown as making up the biasing means, to ascertain that there is enough spring force to keep the panels in their open position.

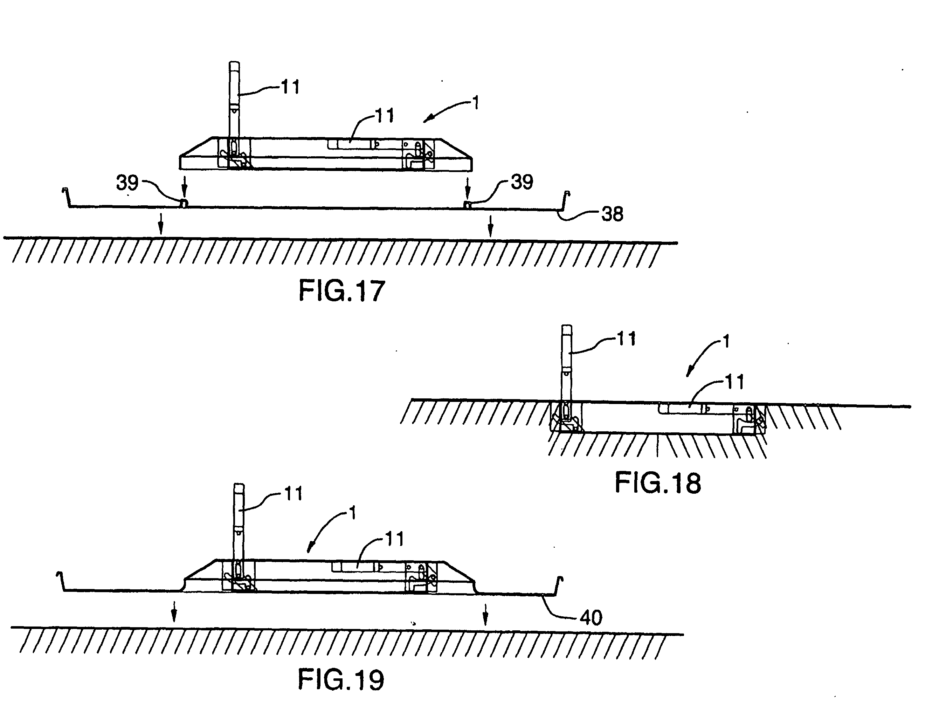

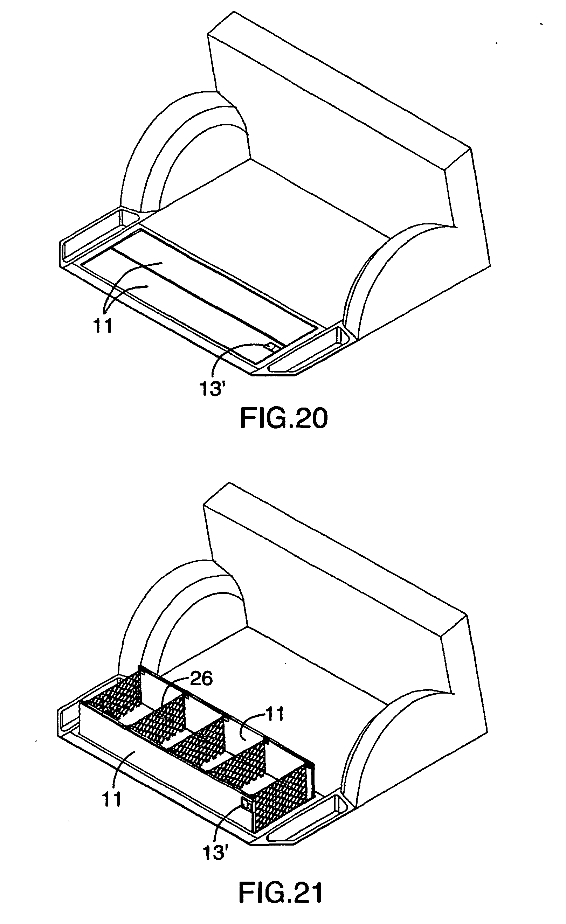

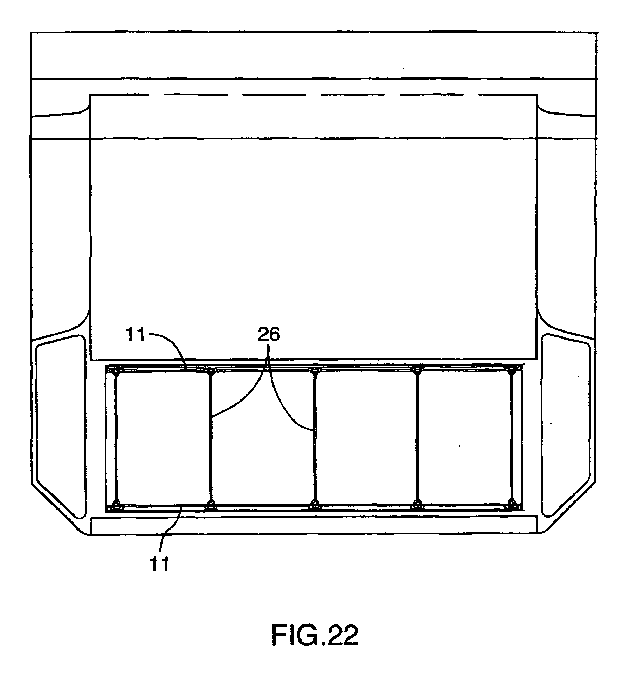

Figs. 17 to 19 show further general embodiments of organizers according to the invention. In Fig. 17, a first cargo tray **38** is placed in the vehicle cargo compartment. The tray protects the cargo space from dirt and/or provides a non-skid surface for safe transportation of cargo. The first tray has alignment lugs **39** for cooperation with indentations (not shown) on the frame **2** of the organizer **1.** The organizer is thus placed upon the tray and held in place by the lugs. Fig. 18 shows an organizer 1, which is manufactured and installed as the vehicle is assembled, thus providing an organizer fully and seamlessly incorporated into the cargo space of the vehicle (Figs. 20 to 22 shows further views of this embodiment of organizer. Fig. 19 shows an embodiment where a second cargo tray **40** is made integral with the organizer **1,** providing a one-piece organizer/tray combination.

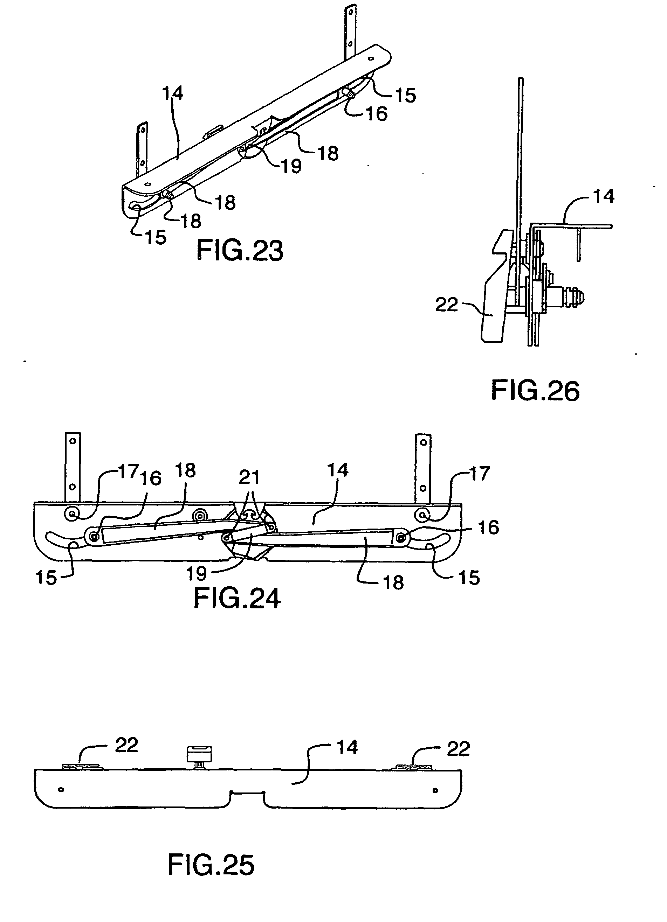

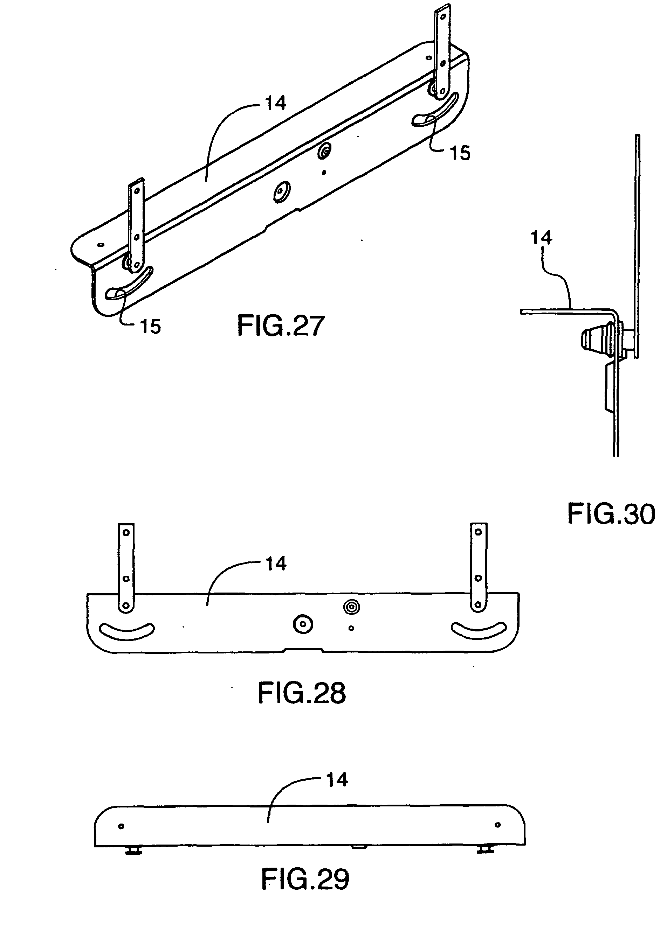

Figs. 23 to 30 show a further embodiment of the first part of the actuator mechanism according to the invention. All reference numbers have been retained from and designate the same features as described earlier for Figs. 3, 9, 13B, 14Aand 14B.

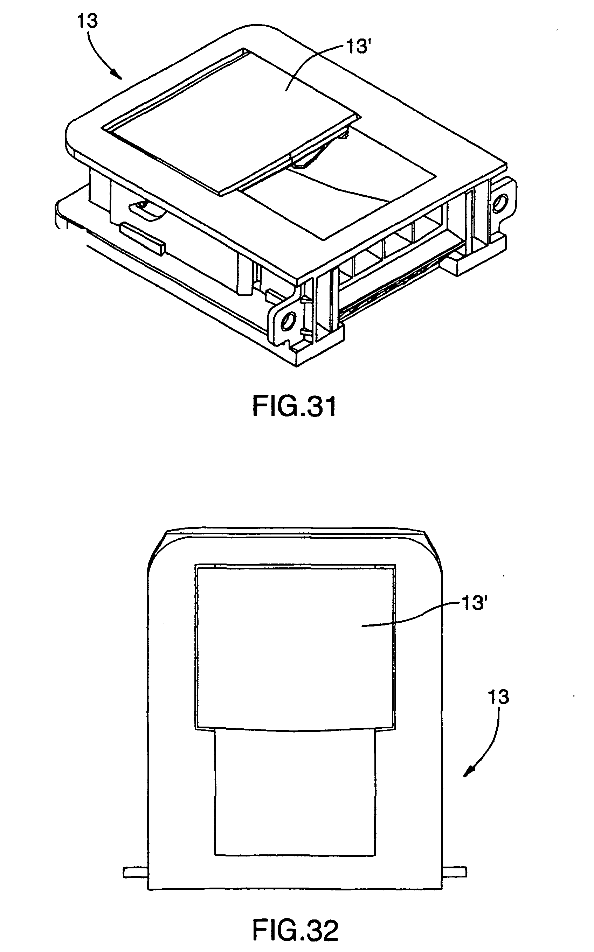

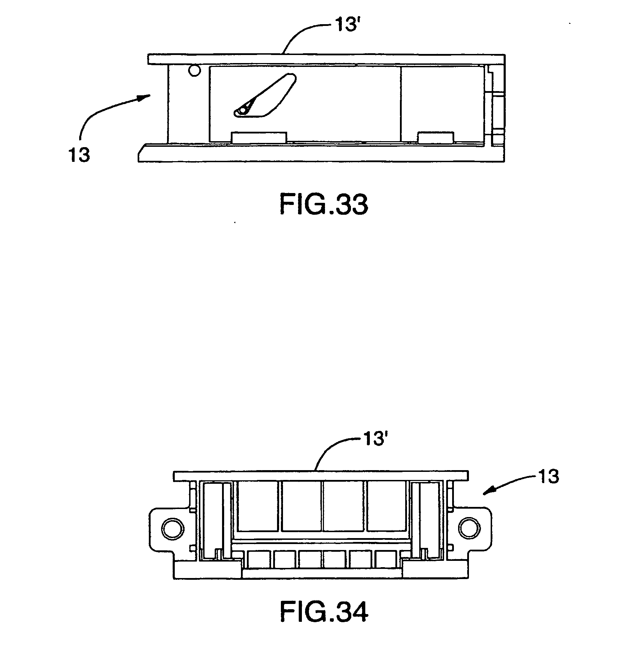

Figs. 31 to 34 show a second release mechanism **13** having a handle **13'.** The particular embodiment of release mechanism is mounted onto the panel **11,** as opposed to on the frame **2.**

The rear vehicle convenience system can be adapted to the trunk or cargo hold of virtually any vehicle by incorporating all or some of the features noted above.

The cargo storage system of the invention can be styled to match the surrounding cargo area, for instance grained and colour keyed. The system is removable and multi-positional (it can be arranged in a multitude of different positions within a vehicle), and has a low profile. The configuration of storage compartments can be tailored to suit different applications, from one large storage compartment to a multitude of smaller compartments, or a mix of small and large storage compartments. The system is furthermore easy to clean, environmentally friendly, recyclable and durable. By using several storage compartments, stowage of multiple common use items can be provided, such as groceries, car care items, sport equipment, etc.

Advantageously, the cargo storage system utilizes the full cargo bed area, with a flush fit at front and rear of the cargo area (contoured front and rear walls of the frame, conforming with the shape of the cargo area.

The panels may have carpeted fronts or any other surface treatment to blend in with the cargo area, for instance. The panels provide a good fore and aft cargo retention in the open position, and folds away easily and unobtrusively to the closed position when not needed. Thus, when closed, almost the full cargo bed height can be used for holding cargo.

The foldable means in the shape of nets are preferably removable, to provide a flexible cargo compartment arrangement, for sorting and securing various smaller cargo items.

The frame base preferably provides access to the in-vehicle cargo tie-down fasteners, and preferably use the tie-downs to fasten the frame base to the vehicle cargo area.

The frame base construction is preferably nestably stackable, to provide economical shipping of the product.

A further embodiment of a cargo storage system according to the invention provides utility trays **7'** (see Fig. 7) on the sides of the frame base **2.**

One advantage associated with the cargo organizer according to the invention is that the panels **11** are locked from unwanted movement in both the closed and the open position. This reduces the squeak and rattle noises commonly generated by any movable parts of a vehicle when the vehicle is in motion. In the closed position, the panels are retained from opening by the second release mechanism **13.** By a user manipulating the release lever **13',** the panels are opened and travel towards the open position biased by the biasing means **25.** To close the panels, i.e. move them to the closed position, the user presses one panel towards the closed position. This is done either after releasing the first release mechanism **12,** if present, or simply by starting the movement of the panel. In the latter case, the panels are advantageously held in the open position by snap-lock means. An added advantage is present in the embodiment without the first release mechanism: the panels are able to close if an excessive force is applied to them, for instance by items rolling around in the cargo compartment, to prevent accidental damage to the panels. If no first release mechanism is used, the biasing means will have to be strong enough to hold the panels in the open position, as described earlier, Thus, the actuation of the panels is advantageously a one-handed process. Also the folding of the panels is easy by requiring the release of the panels with one hand and the folding of the panels with the other hand. The panels being connected together, so only one panel needs to be manipulated into its closed position, while the other panel will perform the corresponding motion. Alternatively, the panels can be folded without activating a release mechanism, necessitating the use of only one hand for the operation. In this case, a snap-lock mechanism is used to hold the panels in the open position, and when sufficient force is exerted on the panels they snap out of the open position and can be moved to the closed position.

The frame base is resistant to twisting, bowing and warping, to provide the necessary rigidity to the system. Alternatively, when the system is integrated into the cargo compartment floor, the floor itself provides the wanted rigidity.

It will be appreciated that the above description relates to the preferred embodiment by way of example only.

### INDUSTRIAL APPLICABILITY

The invention provides a cargo organizer for the cargo compartment of a vehicle.

## Claims

1. A cargo storage system (1) for a vehicle, comprising
a pair of opposing panels (11) pivotable between open and closed positions, such that in said open position said panels are generally upright and spaced apart, thereby exposing a storage compartment, and such that in said closed position said panels are generally co-planar and abut each other so as to cover said storage compartment;
**characterised by**
mechanical means (33) connected between said panels for producing coordinated movement of said panels, such that movement of one said panel between said open and closed positions produces corresponding movement of the other said panel.

2. The cargo storage system as recited in claim 1, wherein said mechanical means are concealed in a base structure, whereby they are substantially hidden from view.

3. The cargo storage system as recited in claim 1 or 2, wherein said mechanical means comprise lever arms connected via push rods.

4. The cargo storage system as recited in claim 1 or 2, wherein said mechanical means comprise sprocket wheels (22') connected via a chain loop (41).

5. The cargo storage system as recited in claim 1 or 2, wherein said mechanical means comprise pulley wheels (22") connected via a belt loop (42).

6. The cargo storage system as recited in claim 1 or 2, wherein said mechanical means comprise intermeshing toothed elements (43 or 44).

7. The cargo storage system as recited in claim 1 or 2, wherein said mechanical means comprise lever arms connected via bendable elongate members.

8. The cargo storage system as recited in claim 7, wherein said bendable elongate members are wire cables (47).

9. The cargo storage system as recited in claim 7, wherein said bendable elongate members are strings.

10. The cargo storage system as recited in any one of claims I to 9, wherein said system further comprises releasing means (12 or 13) for releasing said panels from their closed position.

11. The cargo storage system as recited in claim 10, wherein biasing means (25) automatically move said panels to said open position when said releasing means is operated.

12. The cargo storage system as recited in any one of claims 1 to 11, wherein said system comprises spaced-apart flexible means (26) between said panels to define storage areas between said flexible means and said panels.

13. The cargo storage system as recited in claim 12, wherein said flexible means comprises nets.

14. The cargo storage system as recited in claim 13, wherein said flexible means further comprises resilient cords intertwined with said nets.

15. The cargo storage system as recited in claim 12, wherein said flexible means comprises foldable panels.

16. The cargo storage system as recited in any one of claims 1 to 15, wherein said system has a detachable tray (38), said tray providing at least partly covered protection for a floor of said vehicle.

17. The cargo storage system as recited in any one of claims 1 to 15, wherein said system has a fixedly attached tray (40), said tray providing at least partly covered protection for a floor of said vehicle.

18. The cargo storage system as recited in any one of claims 1 to 15, wherein said system is integrated into a depression in a floor of said vehicle.

## Patentansprüche

1. Gepäckaufbewahrungssystem (1) für ein Fahrzeug mit
einem Paar gegenüberliegender Paneele (11), die zwischen offenen und geschlossenen Positionen so verschwenkbar sind, dass die Paneele in offener Position im Wesentlichen aufrecht stehen und voneinander getrennt sind, wobei sie ein Aufbewahrungsfach freigeben, und dass die Paneele in geschlossener Position generell koplanar sind und aneinander anliegen, um das Aufbewahrungsfach zu verdecken; **gekennzeichnet durch**
mechanische Mittel (33), die zwischen den Paneelen angeschlossen sind, um eine koordinierte Bewegung der Paneele zu bewirken, so dass die Bewegung des einen Paneels zwischen offenen und geschlossenen Positionen eine koordinierte Bewegung des anderen Paneels bewirkt.

2. Gepäckaufbewahrungssystem nach Anspruch 1, **dadurch gekennzeichnet, dass** die mechanischen Mittel in einer Basisstruktur kaschiert sind, wobei sie im Wesentlichen verborgen sind.

3. Gepäckaufbewahrungssystem nach Anspruch 1 oder 2, **dadurch gekennzeichnet, dass** die mechanischen Mittel durch Schubstangen verbundene Hebelarme aufweisen.

4. Gepäckaufbewahrungssystem nach Anspruch 1 oder 2, **dadurch gekennzeichnet, dass** die mechanischen Mittel über eine Kettenschleife (41) verbundene Kettenzahnräder (22') aufweisen.

5. Gepäckaufbewahrungssystem nach Anspruch 1 oder 2, **dadurch gekennzeichnet, dass** die mechanischen Mittel durch eine Riemenschleife (42) verbundene Rillenscheiben (22") aufweisen.

6. Gepäckaufbewahrungssystem nach Anspruch 1 oder 2, **dadurch gekennzeichnet, dass** die mechanischen Mittel ineinander greifende, verzahnte Elemente (43 oder 44) aufweisen.

7. Gepäckaufbewahrungssystem nach Anspruch 1 oder 2, **dadurch gekennzeichnet, dass** die mechanischen Mittel Hebelarme aufweisen, die über biegsame, längliche Elemente verbunden sind.

8. Gepäckaufbewahrungssystem nach Anspruch 7, **dadurch gekennzeichnet, dass** die biegsamen, länglichen Elemente Drahtseile (47) sind.

9. Gepäckaufbewahrungssystem nach Anspruch 7, **dadurch gekennzeichnet, dass** die biegsamen, länglichen Elemente Schnüre sind.

10. Gepäckaufbewahrungssystem nach einem der Ansprüche 1 bis 9, **gekennzeichnet durch** Entriegelungsmittel (12 oder 13) zum Entriegeln der Paneele aus ihrer geschlossenen Position.

11. Gepäckaufbewahrungssystem nach Anspruch 10, **dadurch gekennzeichnet, dass** Vorspannungsmittel (25) die Paneele in die geöffnete Position bewegen, wenn die Entriegelungsmittel betätigt werden.

12. Gepäckaufbewahrungssystem nach einem der Ansprüche 1 bis 11, **gekennzeichnet durch** zueinander beabstandete, flexible Mittel (26) zwischen den Paneelen zum Definieren von Aufbewahrungsbereichen zwischen den flexiblen Mitteln und den Paneelen.

13. Gepäckaufbewahrungssystem nach Anspruch 12, **dadurch gekennzeichnet, dass** die flexiblen Mittel Netze aufweisen.

14. Gepäckaufbewahrungssystem nach Anspruch 13, **dadurch gekennzeichnet, dass** die flexiblen Mittel des weiteren elastische, mit den Netzen verflochtene Schnüre aufweisen.

15. Gepäckaufbewahrungssystem nach Anspruch 12, **dadurch gekennzeichnet, dass** die flexiblen Mittel klappbare Paneele aufweisen.

16. Gepäckaufbewahrungssystem nach einem der Ansprüche 1 bis 15, **gekennzeichnet durch** eine abtrennbare Ablage (38), die mindestens einen teilweise abgedeckten Schutz für einen Boden des Fahrzeugs bildet.

17. Gepäckaufbewahrungssystem nach einem der Ansprüche 1 bis 15, **gekennzeichnet durch** eine fest verbundene Ablage (40), die mindestens einen teilweise abgedeckten Schutz für einen Boden des Fahrzeugs bildet.

18. Gepäckaufbewahrungssystem nach einem der Ansprüche 1 bis 15, **dadurch gekennzeichnet, dass** es in einer Vertiefung in einem Boden des Fahrzeugs integriert ist.

## Revendications

1. Système de rangement pour coffre (1) destiné à un véhicule, comprenant :
une paire de panneaux opposés (11) pouvant pivoter entre des positions ouverte et fermée, de sorte que dans ladite position ouverte, lesdits panneaux sont généralement verticaux et éloignés l'un de l'autre, exposant ainsi un compartiment de rangement, et de sorte que dans ladite position fermée, lesdits panneaux sont généralement coplanaires et en butée l'un contre l'autre afin de recouvrir ledit compartiment de rangement ;
**caractérisé par** :
des moyens mécaniques (33) raccordés entre lesdits panneaux pour produire un mouvement coordonné desdits panneaux, de sorte qu'un mouvement de l'un desdits panneaux entre lesdites positions ouverte et fermée produit un mouvement correspondant de l'autre desdits panneaux.

2. Système de rangement pour coffre selon la revendication 1, dans lequel lesdits moyens mécaniques sont dissimulés dans une structure de base, moyennant quoi ils sont sensiblement cachés à la vue.

3. Système de rangement pour coffre selon la revendication 1 ou 2, dans lequel lesdits moyens mécaniques comprennent des bras de levier raccordés via des tiges de poussée.

4. Système de rangement pour coffre selon la revendication 1 ou 2, dans lequel lesdits moyens mécaniques comprennent des roues dentées (22') raccordées via une boucle de chaîne (41).

5. Système de rangement pour coffre selon la revendication 1 ou 2, dans lequel lesdits moyens mécaniques comprennent des poulies (22'') raccordées via une boucle de courroie (42).

6. Système de rangement pour coffre selon la revendication 1 ou 2, dans lequel lesdits moyens mécaniques comprennent des éléments dentés d'engrènement (43 ou 44).

7. Système de rangement pour coffre selon la revendication 1 ou 2, dans lequel lesdits moyens mécaniques comprennent des bras de levier raccordés via des éléments allongés flexibles.

8. Système de rangement pour coffre selon la revendication 7, dans lequel lesdits éléments allongés flexibles sont des câbles métalliques (47).

9. Système de rangement pour coffre selon la revendication 7, dans lequel lesdits éléments allongés flexibles sont des cordes.

10. Système de rangement pour coffre selon l'une quelconque des revendications 1 à 9, dans lequel ledit système comprend en outre des moyens de dégagement (12 ou 13) pour dégager lesdits panneaux de leur position fermée.

11. Système de rangement pour coffre selon la revendication 10, dans lequel des moyens de sollicitation (25) déplacent automatiquement lesdits panneaux dans ladite position ouverte lorsque lesdits moyens de dégagement sont actionnés.

12. Système de rangement pour coffre selon l'une quelconque des revendications 1 à 11, dans lequel ledit système comprend des moyens flexibles espacés (26) entre lesdits panneaux pour définir des zones de rangement entre lesdits moyens flexibles et lesdits panneaux.

13. Système de rangement pour coffre selon la revendication 12, dans lequel lesdits moyens flexibles comprennent des filets.

14. Système de rangement pour coffre selon la revendication 13, dans lequel lesdits moyens flexibles comprennent en outre des cordes élastiques entrelacées avec lesdits filets.

15. Système de rangement pour coffre selon la revendication 12, dans lequel lesdits moyens flexibles comprennent des panneaux repliables.

16. Système de rangement pour coffre selon l'une quelconque des revendications 1 à 15, dans lequel ledit système possède un plateau amovible (38), ledit plateau assurant au moins une protection partiellement recouverte pour un plancher dudit véhicule.

17. Système de rangement pour coffre selon l'une quelconque des revendications 1 à 15, dans lequel ledit système comprend un plateau (40) fixé de manière fixe, ledit plateau offrant au moins une protection partiellement recouverte pour un plancher dudit véhicule.

18. Système de rangement pour coffre selon l'une quelconque des revendications 1 à 15, dans lequel ledit système est intégré dans une dépression située dans un plancher dudit véhicule.
